# EUROPEAN PATENT APPLICATION

(11) **EP 4 575 239 A1**
(43) Date of publication of application: **25.06.2025**
(21) Application number: 23219133.8
(22) Date of filing: 21.12.2023
(51) Int. Cl.: F16B 13/12

(54) **ANCHOR SYSTEM WITH SHEAR ABSORBANCE SLEEVE**

(71) Applicant: Hilti Aktiengesellschaft, 9494 Schaan (LI)
(72) Inventor: Spampatti, Matteo, 9470 Buchs (CH); Marder, Johannes Alfred, 6800 Feldkirch (AT)
(74) Representative: Hilti Aktiengesellschaft Corporate Intellectual Property

(57) **Abstract**

Anchor system comprising a drop-in anchor and an anchor rod. The anchor rod comprises an anchor rod first end, and a first external thread at the anchor rod first end. The drop-in anchor comprises an anchor sleeve having an expandable first end and an anchor sleeve second end. The drop-in anchor further comprises an expander plug. The anchor sleeve further comprises an internal thread for threadedly engaging the first external thread of the anchor rod. The drop-in anchor further comprises a shear absorbance sleeve that is provided at the anchor sleeve at the anchor sleeve second end of the anchor sleeve. The anchor rod passes through the shear absorbance sleeve. The shear absorbance sleeve has same outer cross section than has the anchor sleeve at the anchor sleeve second end. The shear absorbance sleeve has smaller inner cross section than has the anchor sleeve at the anchor sleeve second end.

## Description

The invention relates to an anchor system according to the preamble of claim 1, a structure comprising such an anchor system and a method for installing such an anchor system.

An anchor system comprising a drop-in anchor is for example known form US2021062846 A1.

It is an object of the invention to provide an anchor system, a structure comprising such an anchor system and a method for installing such an anchor system, which provide particularly good load characteristics, whilst being particularly advantageous from a manufacturing and handling point of view.

This object is achieved by an anchor system according to claim 1, a structure comprising such an anchor system according to claim 9 and a method for installing such an anchor system according to claim 10. Dependent claims refer to preferred embodiments of the invention.

There is thus provided an anchor system comprising a drop-in anchor and an anchor rod,
- wherein the anchor rod comprises an anchor rod first end, and a first external thread that is provided at the anchor rod first end,
- wherein the drop-in anchor comprises an anchor sleeve having an expandable first end and an anchor sleeve second end, and wherein the drop-in anchor further comprises an expander plug that is able to be driven into an installed position within the anchor sleeve, in which the expander plug expands the expandable first end, wherein the anchor sleeve further comprises an internal thread for threadedly engaging the first external thread of the anchor rod.

The anchor system is characterized in that the drop-in anchor further comprises a shear absorbance sleeve that is provided at the anchor sleeve at the anchor sleeve second end of the anchor sleeve, wherein the anchor rod passes through the shear absorbance sleeve, wherein the shear absorbance sleeve has generally same outer cross section than has the anchor sleeve at the anchor sleeve second end, and wherein the shear absorbance sleeve has smaller inner cross section than has the anchor sleeve at the anchor sleeve second end.

Thus, the shear absorbance sleeve has generally higher wall strength than has the anchor sleeve at the anchor sleeve second end. Accordingly, at the rear end of the drop-in anchor, i.e. at that end that is placed at the mouth of the bore when the drop-in anchor is installed as intended, the sleeve component of the drop-in anchor is provided with increase wall strength, as compared to deeper lying regions of the drop-in anchor. The higher wall strength is provided by a shear absorbance sleeve, which is separate from the anchor sleeve, and which is arranged in an aligned relationship with respect to the anchor sleeve. When installed as intended this higher-wall strength shear absorbance sleeve can be arranged so as to pierce through the interface provided between the substrate, in which a drop-in anchor is anchored, and an attachment part attached to the substrate by means of the drop-in anchor. The shear absorbance sleeve is thus able to absorb shear loads arising between the attachment part and the substrate, providing particularly good shear load performance. Due to the comparatively high wall strength of the shear absorbance sleeve, the anchor rod can be provided with correspondingly small cross-section where it passes through the shear absorbance, potentially providing a relatively weak anchor rod yield region, which might allow to save on material, which in term might be advantageous in view of manufacturing. Moreover, purposefully providing a weaker anchor rod yield region might provide a predetermined yield point, giving rise to a particularly well-defined failure mode, defined by the anchor rod. Thus, particularly well-defined load characteristics can be obtained at particularly low effort.

At least one of the anchor rod, the anchor sleeve, the expander plug and/or the shear absorbance sleeve preferably consist of a metal material, more preferably of steel. The anchor rod is preferably massive and/or monolithic. The anchor sleeve is preferably monolithic. The anchor sleeve and the shear absorbance sleeve, respectively, are separate parts, i.e. they are non-monolithic with respect to one another. In particular, the shear absorbance sleeve might be loosely arranged on the anchor sleeve.

In particular, the anchor sleeve has an internal taper at its expandable first end, so that the anchor sleeve can be expanded by driving the expander plug into the installed position within the expandable first end. The expander plug can preferably have a generally frustoconical lateral surface.

The expandable first end and the anchor sleeve second end, respectively, are opposite ends of the anchor sleeve. The drop-in anchor has a longitudinal axis, which extends through the expandable first end and through the anchor sleeve second end. When installed as intended, the anchor rod is aligned co-axially with the longitudinal axis.

Preferably, when the anchor system is installed as intended, in particular when the anchor rod is fully tightened within the internal thread of the anchor sleeve, the anchor rod first end abuts against the expander plug, so as to axially secure the expander plug within the installed position.

In particular, the shear absorbance sleeve is aligned with the anchor sleeve and/or the shear absorbance sleeve is arranged co-axially with respect to the anchor sleeve. The shear absorbance sleeve is located adjacent to the anchor sleeve. In particular, the shear absorbance sleeve adjoins the anchor sleeve. The shear absorbance sleeve has generally same outer cross section than has the anchor sleeve, at least at the anchor sleeve second end. Thus, there is a generally continuous transition between the shear absorbance sleeve and the anchor sleeve at the outer lateral surface of the respective sleeves, without steps in diameter.

When installed as intended, the shear absorbance sleeve is intended to project through the interface formed between a substrate in which the drop-in anchor is anchored and an attachment part attached thereon, so that the shear absorbance sleeve (and the anchor rod passing through the shear absorbance sleeve) can take up shear arising at that interface.

Throughout this document - wherever the terms "axially", "longitudinally", "radially" and "circumferentially" are used, they can refer, in particular, to the longitudinal axis of the drop-in anchor, unless stated otherwise.

According to a preferred embodiment, the anchor rod has, where it passes through the shear absorbance sleeve, smaller cross section than it has at the anchor rod first end. Accordingly, the anchor rod has relatively large cross-section at the anchor rod first end, in particular where it is intended to abut on the expander plug. This allows using particularly large diameter expander plugs, which in term can provide particularly efficient anchoring, on the one hand, and particularly well-defined shear characteristics and well-defined axial yield on the other hand. More preferably, the anchor rod can have an anchor rod yield region, which has generally cylindrical, in particular circular cylindrical, lateral surface, and which passes through the shear absorbance sleeve, wherein the anchor rod has, within the anchor rod yield region, smaller cross section than it has at the anchor rod first end. This can be advantageous in view of manufacturing and load capacity.

Preferentially, the anchor rod yield region has a length l₃₂ and a diameter d₃₂, wherein the length l₃₂ is greater or equal than eight times the diameter d₃₂, i.e. l₃₂ ≥ 8 · d₃₂. This can provide particularly reliable yield and/or breaking characteristics within the anchor rod yield region.

According to another preferred embodiment of the invention, the anchor rod has an anchor rod second end and a second external thread that is provided at the anchor rod second end. This can allow particularly easy mounting of the attachment part, e.g. by screwing a nut onto the second external thread. The anchor rod second end is located adjacent to the anchor rod yield region. The anchor rod second end and the anchor rod yield region might, preferably, have generally same diameter. However, the diameters might also differ.

Preferentially, the drop-in anchor comprises a connection plug, which is attached to the shear absorbance sleeve and projects from the shear absorbance sleeve into the anchor sleeve. This allows particularly easy and reliable positioning of the shear absorbance sleeve with respect to the anchor sleeve. When the anchor system is installed as intended, the anchor rod passes through the connection plug. The connection plug can preferably consist of a metal material, more preferably of steel. It is particularly preferred that the connection plug and the shear absorbance sleeve are monolithic. This can be advantageous in view of manufacturing and/or load absorbance.

Preferably, the drop-in anchor comprises an additional expansion sleeve, which can be radially expanded by a wedge, in particular a conical wedge, provided on the outside of the expansion sleeve, wherein the conical wedge is preferably located at the expandable first end of the anchor sleeve. This additional expansion sleeve can further improve performance of the anchor system, in particular in cracked concrete conditions and/or seismic conditions. The additional expansion sleeve and/or the wedge might be designed as described in US2021062846 A1, which is incorporated by reference.

The invention also relates to a structure comprising a substrate, an anchor system as described here, and an attachment part, wherein the expandable first end of the anchor sleeve is embedded in the substrate, wherein the shear absorbance sleeve projects from the substrate into the attachment part, and wherein the shear absorbance sleeve extends both within the attachment part and within the substrate. Accordingly, the anchor system is installed as intended. In particular, the shear absorbance sleeve is embedded both within substrate (i.e. below the shear plane between attachment part and substrate) and within the attachment part (i.e. above the shear plane between attachment part and substrate), so that the shear absorbance sleeve can absorb shear arising between these two elements.

Whenever mentioned, the substrate can preferably be a concrete substrate. The attachment part might for example include a threaded sleeve for receiving a threaded rod, e.g. for direct or indirect mounting of a pipe ring.

The invention also relates to a method for installing an anchor system as described here, in which a bore is provided in a substrate, the anchor sleeve is inserted into the bore, the expander plug is driven into the installed position within the anchor sleeve and subsequently, the shear absorbance sleeve is placed on the anchor sleeve, such that the shear absorbance sleeve extends within the substrate and protrudes from the substrate. Accordingly, the anchor system is installed as intended. In particular, the anchor rod is screwed into the internal thread of the anchor sleeve before the shear absorbance sleeve is placed on the anchor sleeve. The shear absorbance sleeve will then be plugged onto the anchor rod already in place. This can further facilitate operation. The shear absorbance sleeve can be placed on the anchor sleeve before the attachment part is positioned on substrate - the attachment part will then be plugged onto the shear absorbance sleeve that is already in place. Alternatively, the attachment part can be positioned on substrate before the shear absorbance sleeve is be placed on the anchor sleeve - the shear absorbance sleeve is then led through attachment part onto the expansion sleeve.

Features that are described here in connection with the anchor system can also be used in connection with the structure and/or the method, and vice versa. Features that are described here in connection with the structure system can also be used in connection with the method, and vice versa.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a longitudinally sectional view of a structure comprising an anchor system.

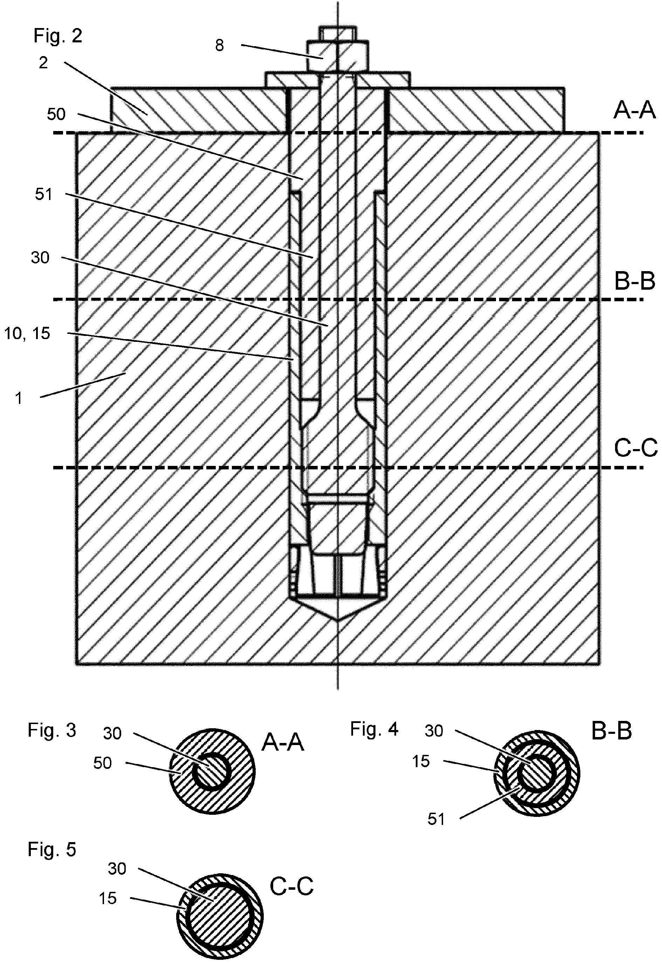

Figure 2 is the same as figure 1, but with some reference numerals omitted, for the sake of clarity, and with additional sectional planes added.
Figure 3 is a cross-sectional view, according to A-A in figure 2, of the anchor system of figures 1 and 2.
Figure 4 is a cross-sectional view, according to B-B in figure 2, of the anchor system of figures 1 and 2.
Figure 5 is a cross-sectional view, according to C-C in figure 2, of the anchor system of figures 1 and 2.

The figures show a structure comprising a substrate 1, in particular a concrete substrate, an attachment part 2, in particular a steel attachment part, and an anchor system that secures the attachment part 2 on the substrate 1.

The anchor system comprises a drop-in anchor 10. The drop-in anchor 10 has a longitudinal axis 99 and comprises an anchor sleeve 15, which has an expandable first end 11 and an anchor sleeve second end 12, wherein the expandable first end 11 and the anchor sleeve second end 12 are opposite ends of the anchor sleeve 15, and wherein the longitudinal axis 99 extends through the expandable first end 11 and through the anchor sleeve second end 12. In particular, the anchor sleeve 15 extends co-axially with respect to the longitudinal axis 99. The anchor sleeve 15 preferably consists of metal, more preferably steel. It can in particular be monolithic.

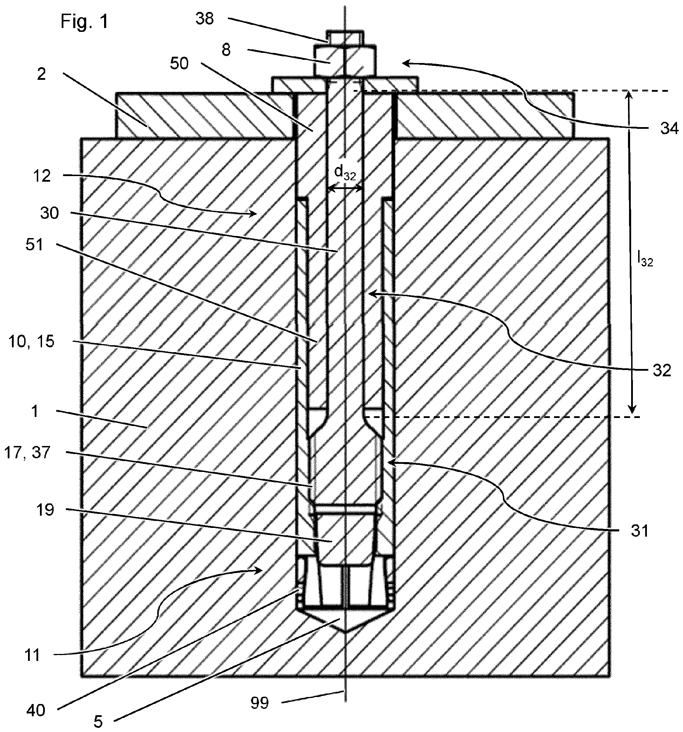

The drop-in anchor 10 further comprises an expander plug 19. The expander plug 19 can be driven, axially, into an installed position within the anchor sleeve 15. In this installed position, the expander plug 19 expands the expandable first end 11 of the anchor sleeve 15. The anchor sleeve 15 has an internal taper which acts as a wedge when the expander plug 19 is driven into the installed position, thereby radially expanding the anchor sleeve 15 when the expander plug 19 is driven axially into the installed position. In figure 1, the expander plug 19 is shown to be positioned in the installed position.

The anchor system furthermore comprises an anchor rod 30, wherein, when installed as intended, the anchor rod 30 extends co-axially with respect to the longitudinal axis 99. When installed as intended, this anchor rod 30 extends into the anchor sleeve 15. The anchor rod 30 consists of metal, preferably of steel. The anchor rod 30 is preferably monolithic and/or massive. In particular, the anchor rod 30 can be solid, i.e. without cavities.

The anchor rod 30 comprises an anchor rod first end 31 and a first external thread 37 that is provided at the anchor rod first end 31. The anchor sleeve 15 comprises an internal thread 17, which corresponds to the first external thread 37. The internal thread 17 of the anchor sleeve 15 is located, axially, adjacent to the expandable first end 11 of the anchor sleeve 15, and preferably adjoins this expandable first end 11.

As shown in figure 1, the first external thread 37 of the anchor rod 30 threadedly engages the internal thread 17 of the anchor sleeve 15 when the anchor system is installed as intended, with the expander plug 19 located in the installed position. Preferably, the anchor rod 30 abuts on the expander plug 19 when the first external thread 37 of the anchor rod 30 is fully tightened within the internal thread 17 of the anchor sleeve 15, as shown in figure 1, thereby axially securing the expander plug 19.

The drop-in anchor 10 further comprises a shear absorbance sleeve 50, which is non-monolithic with respect to the anchor sleeve 15. When the drop-in anchor 10 is installed as intended, as shown in the figures, the shear absorbance sleeve 50 is mounted on the anchor sleeve 15, namely at the anchor sleeve second end 12, so that shear absorbance sleeve 50 and the anchor sleeve 15 are aligned in co-axial and/or adjacent relationship. The shear absorbance sleeve 50 has generally same outer cross section than has the anchor sleeve 15 (at least at the anchor sleeve second end 12), wherein said cross sections are in particular generally circular. Accordingly, no lateral outside step is formed between the anchor sleeve second end 12 and the adjoining shear absorbance sleeve 50. The shear absorbance sleeve 50 has, however, smaller inner cross section than has the anchor sleeve 15 at the anchor sleeve second end 12, wherein said cross sections are in particular generally circular. Accordingly, the anchor sleeve 15 has higher wall strength and, in particular, higher shear absorbance capacity than has the anchor sleeve 15 at the anchor sleeve second end 12. The shear absorbance sleeve 50 preferably consists of metal, more preferably steel. It can in particular be monolithic.

When the anchor system is installed as intended the anchor rod 30 passes through the shear absorbance sleeve 50, projecting from opposite sides of the shear absorbance sleeve 50.

In the shown embodiment, the drop-in anchor 10 comprises a connection plug 51, which is attached to the shear absorbance sleeve 50 and projects from the shear absorbance sleeve 50 into the anchor sleeve 15, when the drop-in anchor 10 is installed as intended. The connection plug 51 can thus assist in aligning and/or holding the shear absorbance sleeve 50 with respect to the anchor sleeve 15. When the anchor system is installed as intended the anchor rod 30 passes through the connection plug 51, projecting from opposite sides of the connection plug 51. Preferably, the connection plug 51 and the shear absorbance sleeve 50 are monolithic.

Adjacent to the anchor rod first end 31 that is provided with the first external thread 37, the anchor rod 30 comprises an anchor rod yield region 32. In the anchor rod yield region 32, the anchor rod 30 has smaller cross section than it has at the anchor rod first end 31. In the anchor rod yield region 32, the anchor rod 30 has generally cylindrical, in particular circular cylindrical, lateral surface. The anchor rod yield region 32 has a length l₃₂, measured parallel to the longitudinal axis 99, and a diameter d₃₂, measured perpendicularly to the longitudinal axis 99. The length l₃₂ is greater or equal than eight times the diameter d₃₂, and in the shown embodiment, this ratio is approximately 9.1. The anchor rod yield region 32 passes through the shear absorbance sleeve 50 and through the connection plug 51 when the anchor system is installed as intended, as shown in the figures.

The anchor rod has an anchor rod second end 34, wherein the anchor rod first end 31 and the anchor rod second end 34 are opposite ends of the anchor rod 30. In the shown structure, the anchor rod second end 34 projects from the attachment part 2. At the anchor rod second end 34, the anchor rod 30 is provided with a second external thread 38. The anchor system furthermore comprises a nut 8, which has a nut internal thread that corresponds to the second external thread 38. In the shown structure, the nut 8 is screwed onto the second external thread 38 of the anchor rod 30, so that the nut 8 secures the attachment part 2 on the substrate 1 (in the shown embodiment, this securement is indirect via a washer, but it can also be direct). In the present embodiment, the cross sections of the anchor rod 30 at the anchor rod second end 34 and in the anchor rod yield region 32, respectively, are generally the same.

The anchor rod yield region 32 is located adjacent to and axially distant from of the anchor rod first end 31, and the anchor rod second end 34 is located adjacent to and axially distant from the anchor rod yield region 32. The longitudinal axis 99 extends through the anchor rod first end 31, the anchor rod yield region 32 and the anchor rod second end 34, when the anchor rod 30 is installed as intended within the structure.

In the shown embodiment, the drop-in anchor 10 comprises an additional expansion sleeve 40, which can be radially expanded by a conical wedge provided on the outside of the anchor sleeve 15, preferably at the expandable first end 11 thereof. However, this is exemplary only, and embodiments without the additional expansion sleeve 40 are also feasible.

When the anchor system is used, a bore 5 is provided within the substrate 1 (which can in particularly be a concrete substrate) and the anchor sleeve 15 of the drop-in anchor 10 is inserted into the bore 5, with the expandable first end 11 of the anchor sleeve 15 leading, until the anchor sleeve second end 12 of the anchor sleeve 15 is sunk within the bore 5. The expander plug 19 is then axially driven into the expandable first end 11 so as to radially expand the expandable first end 11, thereby anchoring the drop-in anchor 10 within the substrate 1.

Subsequently, the anchor rod 30 is inserted into the anchor sleeve 15, with the anchor rod first end 31 leading, and the first external thread 37 is brought into threaded engagement with the internal thread 17, until the anchor rod 30 abuts on the expander plug 19. The length of the anchor rod 30 is so dimensioned that the anchor rod 30 projects from the bore 5 when the anchor rod 30 abuts on the expander plug 19.

The shear absorbance sleeve 50 is then plugged onto the anchor rod 30 and, by means of the connection plug 51, into the anchor sleeve 15. In particular, the shear absorbance sleeve 50 is brought into an abutting relationship with respect to the anchor sleeve second end 12. Since the anchor sleeve second end 12 is sunk within the bore 5, the shear absorbance sleeve 50 projects into the bore 5 in the substrate 1 when the shear absorbance sleeve 50 abuts on the anchor sleeve 15.

The attachment part 2 is placed adjacent to the substrate 1 and the anchor rod 30 is led through the attachment part 2. In one alternative embodiment, the attachment part 2 is placed adjacent to the substrate 1 before the anchor sleeve 15 is inserted into the bore 5 in the substrate 1, and the anchor sleeve 15 is inserted into the bore 5 in the substrate 1 through the attachment part 2. In another alternative embodiment, the attachment part 2 is placed adjacent to the substrate 1 after the anchor sleeve 15 has been inserted into the bore 5 in the substrate 1.

The shear absorbance sleeve 50, in particular its axial length, is so dimensioned that when the shear absorbance sleeve 50 abuts on the anchor sleeve 15, it projects from the substrate 1 into the attachment part 2, thereby providing a shear transfer mechanism between the attachment part 2 and the substrate 1.

The nut 8 is threaded onto the second external thread 38 that is provided at the anchor rod second end 34, thereby securing the attachment part 2 on the substrate 1. The resulting structure is shown in the figures. In particular, the structure is characterized in that the shear absorbance sleeve 50 projects from the substrate 1 into the attachment part 2, such that the shear absorbance sleeve 50 is located both within the substrate 1 and within the attachment part 2.

## Claims

1. Anchor system comprising a drop-in anchor (10) and an anchor rod (30),
- wherein the anchor rod (30) comprises an anchor rod first end (31), and a first external thread (37) that is provided at the anchor rod first end (31),
- wherein the drop-in anchor (10) comprises an anchor sleeve (15) having an expandable first end (11) and an anchor sleeve second end (12), and wherein the drop-in anchor (10) further comprises an expander plug (19) that is able to be driven into an installed position within the anchor sleeve (15), in which the expander plug (19) expands the expandable first end (11), wherein the anchor sleeve (15) further comprises an internal thread (17) for threadedly engaging the first external thread (37) of the anchor rod (30),
**characterized in that**
- the drop-in anchor (10) further comprises a shear absorbance sleeve (50) that is provided at the anchor sleeve (15) at the anchor sleeve second end (12) of the anchor sleeve (15), wherein the anchor rod (30) passes through the shear absorbance sleeve (50), wherein the shear absorbance sleeve (50) has generally same outer cross section than has the anchor sleeve (15) at the anchor sleeve second end (12), and wherein the shear absorbance sleeve (50) has smaller inner cross section than has the anchor sleeve (15) at the anchor sleeve second end (12).

2. Anchor system according to claim 1,
**characterized in that**
the anchor rod (30) has, where it passes through the shear absorbance sleeve (50), smaller cross section than it has at the anchor rod first end (31).

3. Anchor system according to claim 2,
**characterized in that**
the anchor rod (30) has an anchor rod yield region (32), which has generally cylindrical, in particular circular cylindrical, lateral surface, and which passes through the shear absorbance sleeve (50), wherein the anchor rod (30) has, within the anchor rod yield region (32), smaller cross section than it has at the anchor rod first end (31).

4. Anchor system according to claim 3,
**characterized in that**
the anchor rod yield region (32) has a length (l₃₂) and a diameter (d₃₂), wherein the length (l₃₂) is greater or equal than eight times the diameter (d₃₂).

5. Anchor system according to any of the preceding claims,
**characterized in that**
the anchor rod (30) has an anchor rod second end (34) and a second external thread (38) that is provided at the anchor rod second end (34).

6. Anchor system according to any of the preceding claims,
**characterized in that**
the drop-in anchor (10) comprises a connection plug (51), which is attached to the shear absorbance sleeve (50) and projects from the shear absorbance sleeve (50) into the anchor sleeve (15).

7. Anchor system according to claim 6,
**characterized in that**
the connection plug (51) and the shear absorbance sleeve (50) are monolithic.

8. Anchor system according to any of the preceding claims,
**characterized in that**
the drop-in anchor (10) comprises an additional expansion sleeve (40), which can be radially expanded by a conical wedge provided on the outside of the anchor sleeve (15).

9. Structure comprising a substrate (1), an anchor system according to any one of the proceeding claims, and an attachment part (2), wherein the expandable first end (11) of the anchor sleeve (15) is embedded in the substrate (1), wherein the shear absorbance sleeve (50) projects from the substrate (1) into the attachment part (2), and wherein the shear absorbance sleeve (50) extends both within the attachment part (2) and within the substrate (1).

10. Method for installing an anchor system according to any of claims 1 to 8, in which a bore is provided in a substrate (1), the anchor sleeve (15) is inserted into the bore, the expander plug (19) is driven into the installed position within the anchor sleeve (15) and subsequently, the shear absorbance sleeve (50) is placed on the anchor sleeve (15), such that the shear absorbance sleeve (50) extends within the substrate (1) and protrudes from the substrate (1).

11. Method according to claim 10,
**characterized in that**
the anchor rod (30) is screwed into the internal thread (17) of the anchor sleeve (15) before the shear absorbance sleeve (50) is placed on the anchor sleeve (15).
